(19) Europäisches Patentamt
European Patent Office
Office européen des brevets

(11) **EP 4 443 756 B1**

(12) **FASCICULE DE BREVET EUROPEEN**

(45) Date de publication et mention
de la délivrance du brevet:
**15.07.2026 Bulletin 2026/29**

(21) Numéro de dépôt: **24168063.6**

(22) Date de dépôt: **02.04.2024**

(51) Classification Internationale des Brevets (IPC):
**H04B 7/024** *(2017.01)* **H04B 1/04** *(2006.01)*
**H04B 7/0452** *(2017.01)* **H04L 27/36** *(2006.01)*
**H04B 7/0413** *(2017.01)* **H04L 25/03** *(2006.01)*
**H04L 27/26** *(2006.01)* **H04L 25/02** *(2006.01)*

(52) Classification Coopérative des Brevets (CPC):
**H04B 7/024; H04B 1/0475; H04B 7/0413;**
**H04B 7/0452; H04L 25/03343;** H04L 25/022;
H04L 25/0224; H04L 27/2626

(54) **POINT D'ACCÈS D'UN RÉSEAU MIMO MASSIF DISTRIBUÉ ET SANS CELLULE, RÉSEAU ET PROCÉDÉ DE LIMITATION DE LA DISTORSION DE SIGNAL CAUSÉE PAR DES IMPERFECTIONS MATÉRIELLES DE POINT(S) D'ACCÈS**

ZELLLOSER VERTEILTER MASSIVER MIMO-NETZWERKZUGANGSPUNKT, NETZWERK UND VERFAHREN ZUR BEGRENZUNG DER SIGNALVERZERRUNG DURCH HARDWARE-FEHLER VON ZUGANGSPUNKT(EN)

ACCESS POINT OF A CELL-FREE DISTRIBUTED MASSIVE MIMO NETWORK, NETWORK AND METHOD FOR MITIGATING SIGNAL DISTORTION CAUSED BY HARDWARE IMPERFECTIONS OF ACCESS POINT(S)

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **03.04.2023 FR 2303280**

(43) Date de publication de la demande:
**09.10.2024 Bulletin 2024/41**

(73) Titulaire: **Commissariat à l'Energie Atomique et aux Energies Alternatives**
**75015 Paris (FR)**

(72) Inventeur: **ZAYANI, Rafik**
**38054 GRENOBLE CEDEX 9 (FR)**

(74) Mandataire: **Lavoix**
**2, place d'Estienne d'Orves**
**75441 Paris Cedex 09 (FR)**

(56) Documents cités:
**US-A1- 2017 366 226 US-A1- 2022 302 967**

- **ZAYANI RAFIK ET AL: "Efficient Precoding for Massive MIMO Downlink Under PA Nonlinearities", IEEE COMMUNICATIONS LETTERS, IEEE SERVICE CENTER, PISCATAWAY, NJ, US, vol. 23, no. 9, 1 September 2019 (2019-09-01), pages 1611 - 1615, XP011744998, ISSN: 1089-7798, [retrieved on 20190909], DOI: 10.1109/LCOMM.2019.2924001**

**EP 4 443 756 B1**

**Description**

La présente invention concerne un point d'accès d'un réseau MIMO massif distribué et sans cellule.

L'invention concerne également un tel réseau MIMO massif distribué et sans cellule.

L'invention concerne également un procédé de limitation de la distorsion de signal causée par les imperfections matérielles d'une pluralité de points d'accès d'une liaison fronthaul d'un réseau MIMO massif distribué et sans cellule.

L'invention concerne également un programme d'ordinateur comportant des instructions logicielles qui, lorsqu'elles sont exécutées par un ordinateur, mettent en œuvre un tel procédé de limitation de la distorsion de signal causée par les imperfections matérielles d'une pluralité de points d'accès d'une liaison fronthaul d'un réseau MIMO massif distribué et sans cellule.

La présente invention concerne de manière générale le domaine des systèmes de communications sans fil tel que décrit dans le document US 2022/302967 A1, et plus particulièrement de la transmission de données via l'utilisation d'un signal radiofréquence utilisant une modulation multi-porteuse, notamment OFDM (de l'anglais *Orthogonal Frequency Division Multiplexing*) selon une voie de communication descendante correspondant à la communication entre points d'accès et utilisateurs.

Les systèmes de télécommunication utilisant une modulation multi-porteuse pour la voie de communication descendante sont bien connus dans l'état de la technique. Le principe d'une telle modulation consiste à diviser la bande de transmission en une pluralité de sous-canaux fréquentiels associés à des porteuses et à moduler chacune de ces porteuses par les données à transmettre sur ladite voie de communication descendante, également appelée par la suite voie descendante.

Plus précisément, la présente invention s'inscrit dans le cadre d'une architecture réseau de type MIMO (de l'anglais *Multiple-Input Multiple-Output*) massif distribué et sans cellule, ou CF-mMIMO (de l'anglais *cell-free massive MIMO*) tel que notamment introduite dans l'article de S. Buzzi et al. intitulé « Cell-free massive mima: User-centric approach » publié dans IEEE Wireless Communications Letters, vol. 6, no. 6, pp. 706-709, 2017. Une telle architecture réseau MIMO massif distribué et sans cellule a été proposée pour répondre à la croissance exponentielle du trafic de données mobiles et aux problèmes d'interférence intercellulaire et de variation de qualité de service trop importante, afin de faire face aux défis de la sixième génération de communications mobiles, 6G.

Une telle architecture réseau MIMO massif distribué et sans cellule est composée d'un grand nombre de points d'accès, ou AP (de l'anglais *Access Point*) géographiquement distribués qui desservent conjointement les terminaux utilisateurs selon ladite voie descendante, ou UE (de l'anglais *User Equipement*), ce qui garantit un gain de macro-diversité et offre une bonne efficacité spectrale, ou SE (de l'anglais *Spectral Efficiency*) uniformément bonne dans la zone de couverture.

De tels systèmes de télécommunication basés sur une telle architecture réseau MIMO massif distribué et sans cellule ne peuvent être commercialement intéressants que si les points d'accès AP sont déployés à l'aide de matériel peu coûteux et à faible consommation d'énergie. Par conséquent, de sévères imperfections matérielles, ou HWIs (de l'anglais *hardware impairments*) peuvent se produire lors de la transmission de signaux radiofréquence utilisant une modulation multi-porteuse, notamment OFDM avec un facteur de crête, ou PAPR (de l'anglais Peak-to-Average Power Ratio) élevé, ce qui entraîne une mauvaise qualité de transmission.

Le but de la présente invention est par conséquent de proposer une solution permettant de limiter efficacement l'effet de telles imperfections matérielles afin de permettre des déploiements de points d'accès efficaces en termes de coûts et d'énergie au sein de tels réseaux MIMO massifs distribués et sans cellule et fournir des communications présentant un haut rendement énergétique.

A cet effet, l'invention porte sur un point d'accès d'un réseau MIMO massif distribué et sans cellule selon la revendication 1.

La présente invention vise ainsi à tirer profit de chaque liaison fronthaul reliant en série une pluralité de points d'accès jusqu'à l'unité centrale de la station de base, en d'autres termes, la liaison fronthaul correspondant, par définition selon la présente invention, à la liaison d'interconnexion des points d'accès avec l'unité centrale, et ce pour corriger de proche en proche via ladite liaison fronthaul la distorsion de signal causée par les imperfections matérielles de chaque point d'accès lors de la mise en œuvre de la communication sur la voie de communication descendante du réseau MIMO massif distribué et sans cellule, chaque point d'accès étant configuré pour annuler la distorsion causée par les imperfections matérielles du point d'accès le précédent au sein de ladite liaison fronthaul, et ainsi de suite en partant du point d'accès le plus éloigné jusqu'à atteindre l'unité centrale de la station de base, selon un sens de parcours prédéterminé de ladite liaison fronthaul.

Suivant d'autres aspects avantageux de l'invention, le point d'accès d'un réseau MIMO massif distribué et sans cellule comprend une ou plusieurs des caractéristiques suivantes, prises isolément ou suivant toutes les combinaisons techniquement possibles :

- pour déterminer ladite information représentative de la distorsion de signal, ledit module de détermination du point d'accès est configuré pour :

- obtenir une estimation locale du canal de propagation entre chacun de ses émetteurs et chaque terminal utilisateur à sa portée au sein dudit réseau MIMO massif distribué et sans cellule,
- déterminer la puissance allouée à chaque signal de données propre à être transmis entre ledit point d'accès et chaque terminal utilisateur à sa portée au sein dudit réseau MIMO massif distribué et sans cellule,
- précoder chaque signal de données propre à être transmis entre chacun de ses émetteurs et chaque terminal utilisateur à sa portée au sein dudit réseau MIMO massif distribué et sans cellule, en fonction de ladite estimation locale et de ladite puissance allouée associées ;
- transmettre chaque signal précodé en entrée d'un modèle matériel de la chaine de transmission de son émetteur associé ;
- déterminer ladite information représentative de la distorsion de signal causée par les propres imperfections matérielles dudit émetteur par comparaison de la sortie dudit modèle matériel et dudit signal précodé d'entrée ;

- ledit modèle matériel de la chaine de transmission de chaque émetteur est modélisé en utilisant au moins une mesure prédéterminée et/ou une optimisation prédéterminée ;
- ledit point d'accès comprend une pluralité d'émetteurs actifs simultanément, ladite information représentative d'une distorsion de signal causée par les propres imperfections matérielles correspondant à la concaténation de la distorsion de signal causée par les propres imperfections matérielles de chacun des émetteurs de ladite pluralité ;
- chaque émetteur est un émetteur OFDM ;
- chaque filtre de précodage local est de type précodage de transmission à rapport maximal MRT, forçage à zéro pour les pilotes FZF ou forçage à zéro régularisé RZF.

L'invention a également pour objet une unité centrale d'une station de base d'un réseau MIMO massif distribué et sans cellule, ladite unité centrale étant associée à au moins une liaison fronthaul comprenant une pluralité desdits points d'accès en série et ordonnés selon un sens de parcours prédéterminé de ladite liaison fronthaul jusqu'à ladite unité centrale,

ladite unité centrale de station de base comprenant au moins un module de réception configuré pour recevoir, via ladite liaison fronthaul, une information représentative d'une distorsion de signal causée par les imperfections matérielles d'un point d'accès la précédant directement au sein de ladite liaison fronthaul, et pour prendre en compte ladite information pour déterminer les filtres de précodage locaux de ladite unité centrale configurés pour annuler ladite distorsion de signal causée par les imperfections matérielles dudit point d'accès la précédant

L'invention a également pour objet un réseau MIMO massif distribué et sans cellule comprenant au moins une liaison fronthaul, ladite au moins une liaison fronthaul comprenant une pluralité de points d'accès en série selon l'invention tels que décrits précédemment et ordonnés selon un sens de parcours prédéterminé de ladite liaison fronthaul.

L'invention a également pour objet un procédé de limitation de la distorsion de signal causée par les imperfections matérielles d'une pluralité de points d'accès d'une liaison fronthaul d'un réseau MIMO massif distribué et sans cellule selon la revendication 9.

Suivant un aspect optionnel avantageux du procédé selon l'invention, ladite détermination d'une information représentative d'une distorsion de signal causée par les propres imperfections matérielles dudit point d'accès comprend :

- l'obtention d'une estimation locale du canal de propagation entre chacun de ses émetteurs et chaque terminal utilisateur à sa portée au sein dudit réseau MIMO massif distribué et sans cellule,
- la détermination de la puissance allouée à chaque signal de données propre à être transmis entre ledit point d'accès et chaque terminal utilisateur à sa portée au sein dudit réseau MIMO massif distribué et sans cellule,
- le précodage de chaque signal de données propre à être transmis entre chacun de ses émetteurs et chaque terminal utilisateur à sa portée au sein dudit réseau MIMO massif distribué et sans cellule, en fonction de ladite estimation locale et de ladite puissance allouée associées ;
- la transmission de chaque signal précodé en entrée d'un modèle matériel de la chaine de transmission de son émetteur associé ;

- la détermination de ladite information représentative de la distorsion de signal causée par les propres imperfections matérielles dudit émetteur par comparaison de la sortie dudit modèle matériel et dudit signal précodé d'entrée.

L'invention a également pour objet un programme d'ordinateur comportant des instructions logicielles qui, lorsqu'elles sont exécutées par un ordinateur, mettent en œuvre un tel procédé de limitation de la distorsion de signal causée par les imperfections matérielles d'une pluralité de points d'accès d'une liaison fronthaul d'un réseau MIMO massif distribué et sans cellule tel que défini ci-dessus.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

- **[Fig 1]** la figure 1 est une représentation schématique d'un point d'accès selon la présente invention;
- **[Fig 2]** la figure 2 illustre un exemple d'architecture matérielle d'une partie du point d'accès représenté schématiquement sur la figure 1 ;
- **[Fig 3]** la figure 3 est une représentation schématique de deux modes de réalisation de liaison fronthaul d'un réseau MIMO massif distribué et sans cellule et du rôle joué par chacun des points d'accès de la pluralité de points d'accès en série qui la compose;
- **[Fig 4]** la figure 4 est un organigramme du procédé de limitation de la distorsion de signal causée par les imperfections matérielles d'une pluralité de points d'accès d'une liaison fronthaul d'un réseau MIMO massif distribué et sans cellule.

Il est à noter que par la suite, les conventions suivantes de notations mathématiques sont utilisées, à savoir que :

- les matrices sont désignées par des lettres majuscules en gras, par exemple $\boldsymbol{X},$
- les vecteurs sont désignés par des lettres minuscules en gras, par exemple $\boldsymbol{x},$
- une transposée matricielle, une transposée conjuguée matricielle, une matrice pseudo-inverse matricielle et la trace d'une matrice sont respectivement désignées par $\boldsymbol{X^T}, \boldsymbol{X^H}, \boldsymbol{X}^\dagger$ et $tr(\boldsymbol{X})$ respectivement,
- pour une matrice de dimension $M \times N,$ la notation $\boldsymbol{X} = \{x_{mn}\}$ est utilisé, avec $x_n$ pour désigner la n$^{\text{ième}}$ colonne, et $x_m^t$ pour désigner la m$^{\text{ième}}$ ligne,
- la matrice identité $N \times N$ et la matrice tout-zéros $M \times N$ sont respectivement désignées par $\boldsymbol{I_N}$ et $\boldsymbol{0}_{M \times N},$
- la notation $\boldsymbol{X} = diag\{x_1, ..., x_k\}$ désigne une matrice diagonale avec des éléments $\{x_i\},$
- E [.] représente l'opérateur d'espérance, ! est l'opérateur factoriel et j représente $\sqrt{-1}$ .

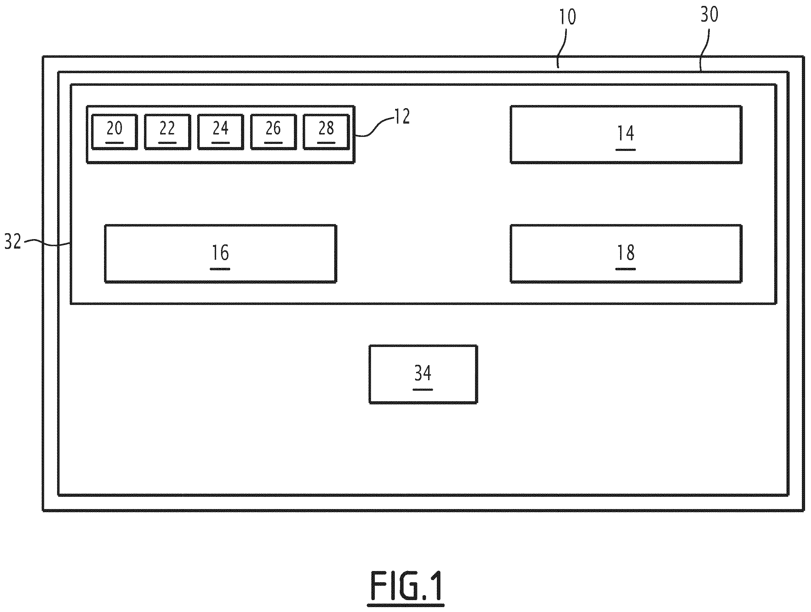

La figure 1 illustre tout d'abord schématiquement un point d'accès 10 d'un réseau MIMO massif distribué et sans cellule selon la présente invention.

Selon la présente invention, un tel point d'accès 10 d'un réseau MIMO massif distribué et sans cellule comprend tout d'abord un module 12 de détermination configuré pour déterminer une information représentative d'une distorsion de signal causée par les propres imperfections matérielles dudit point d'accès 10.

De plus, le point d'accès 10 selon la présente invention comprend un module 14 de transmission configuré pour transmettre, via une liaison fronthaul comprenant une pluralité de points d'accès en série ordonnés selon un sens de parcours prédéterminé de ladite liaison fronthaul jusqu'à l'unité centrale, ladite information représentative de ladite distorsion de signal à un autre point d'accès, ou à l'unité centrale d'une station de base, le suivant directement au sein de ladite liaison fronthaul.

Par ailleurs, le point d'accès 10, selon la présente invention, comprend également un module 16 de réception configuré pour recevoir, via ladite liaison fronthaul, ladite information représentative d'une distorsion de signal causée par les imperfections matérielles d'un point d'accès le précédant directement au sein de ladite liaison fronthaul, et pour la prendre en compte pour déterminer les filtres de précodage locaux dudit point d'accès configurés pour annuler ladite distorsion de signal causée par les imperfections matérielles dudit point d'accès le précédant.

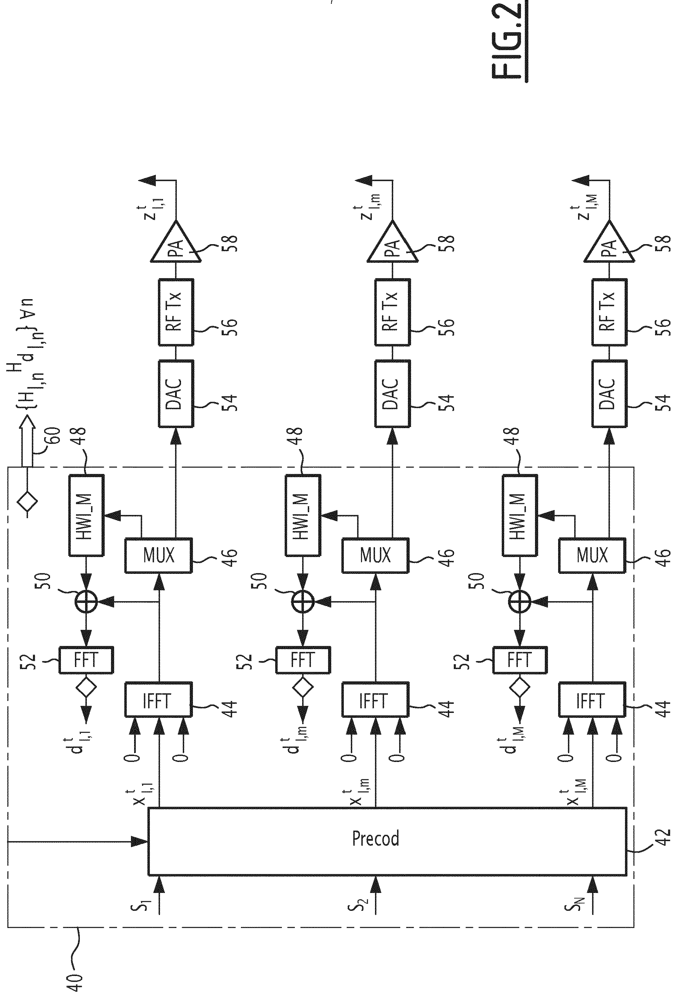

De plus, le point d'accès 10, comprend, de manière classique, un ensemble 18 de modules électroniques dédiés aux traitements classiques mis en œuvre classiquement par un point d'accès d'un réseau MIMO massif distribué et sans cellule, tels que par exemple un module d'estimation de canal configuré pour estimer le canal, un premier module de précodage configuré pour calculer les filtres de précodage locaux (i.e. classiquement sans se préoccuper de la distorsion de signal causée par les imperfections matérielles dudit point d'accès le précédant), un deuxième module de précodage configuré pour précoder chacun des vecteurs de données propres à être transmis à un utilisateur en appliquant lesdits filtres de précodage locaux, des éléments électroniques de l'interface radio configurée pour transmettre, par voie radio, les données précodées, via lesdits filtres de précodages, aux utilisateurs, etc., ces éléments étant par la suite décrits en relation avec la figure 2 illustre un exemple d'architecture matérielle d'une partie du point d'accès représenté schématiquement sur la figure 1.

On décrit ci-après plus en détail un exemple de module de détermination 12 tel que représenté par la figure 1.

En effet, selon le mode de réalisation illustré par la figure 1, le module de détermination 12 comprend par exemple les éléments 20, 22, 24, 26 et 28.

L'élément 20 est notamment configuré pour obtenir une estimation locale du canal de propagation entre chacun des émetteurs (non représentés sur la figure 1) du point d'accès 10 et chaque terminal utilisateur à sa portée au sein dudit réseau MIMO massif distribué et sans cellule.

Une telle estimation locale de canal est notamment mise en œuvre par un module d'estimation de canal de l'ensemble 18 et l'élément 20 récupère chaque estimation de canal entre chacun des émetteurs (non représentés sur la figure 1) du point d'accès 10 et chaque terminal utilisateur à sa portée au sein dudit réseau MIMO massif distribué et sans cellule.

L'élément 22 est configuré pour déterminer la puissance allouée à chaque signal de données propre à être transmis entre ledit point d'accès et chaque terminal utilisateur à sa portée au sein dudit réseau MIMO massif distribué et sans cellule.

L'élément 24 est configuré pour précoder chaque signal de données propre à être transmis entre chacun des émetteurs du point d'accès 10 et chaque terminal utilisateur à sa portée au sein dudit réseau MIMO massif distribué et sans cellule, en fonction de ladite estimation locale et de ladite puissance allouée associées.

L'élément 26 est configuré pour transmettre chaque signal précodé en entrée d'un modèle matériel de la chaine de transmission de son émetteur associé (i.e. associé audit signal précodé).

L'élément 28 est configuré pour déterminer ladite information représentative de la distorsion de signal causée par les propres imperfections matérielles dudit émetteur par comparaison de la sortie dudit modèle matériel et dudit signal précodé d'entrée.

Selon une variante illustrée à titre d'exemple par la figure 1, le point d'accès 10 comprend en outre une unité de traitement 30 formée par exemple d'une mémoire 32 et d'un processeur 34 associé à la mémoire 32, et le point d'accès 10 est au moins en partie réalisé sous forme d'un logiciel, ou d'une brique logicielle, exécutable par le processeur, notamment le module de détermination 12, le module de transmission 14, le module de réception 16, et un ou plusieurs modules électronique de l'ensemble 18 de modules électroniques dédiés aux traitements classiques mis en œuvre classiquement par un point d'accès d'un réseau MIMO massif distribué et sans cellule. La mémoire 32 du point d'accès 10 est alors apte à stocker de tels logiciels ou briques logicielles, et le processeur 34 est alors apte à les exécuter.

En variante non représentée, le module de détermination 12, le module de transmission 14, le module de réception 16, et un ou plusieurs modules électroniques de l'ensemble 18 de modules électroniques dédiés aux traitements classiques mis en œuvre classiquement par un point d'accès d'un réseau MIMO massif distribué et sans cellule sont réalisés chacun sous forme d'un composant logique programmable, tel qu'un FPGA (de l'anglais Field Programmable Gate Array), ou encore sous forme d'un circuit intégré dédié, tel qu'un ASIC (de l'anglais Application Specific integrated Circuit).

Lorsqu'au moins une partie du point d'accès 10 selon la présente invention est réalisée sous forme d'un ou plusieurs logiciels, c'est-à-dire sous forme d'un programme d'ordinateur, cette partie est en outre apte à être enregistrée sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou encore une carte optique. Sur le support lisible est alors mémorisé un programme d'ordinateur comportant des instructions logicielles.

La figure 2 illustre un exemple non limitatif d'architecture matérielle d'une partie du point d'accès représenté schématiquement sur la figure 1, notamment dans le cas où l'on considère utile la mise en œuvre de réseaux de type MIMO massif distribué et sans cellule, utilisant notamment une modulation multi-porteuse, notamment OFDM, ces réseaux étant connus sous le nom abrégé CF-mMIMO-OFDM.

Selon cet exemple, on considère notamment N signaux d'entrée modulés $s_1$ à $s_N$, N étant un entier correspondant au nombre de sous-porteuses OFDM, en entrée d'un ensemble 40 de modules électroniques de traitement numérique du signal.

Les données d'information à transmettre à K utilisateurs sur la $n^{ième}$ sous-porteuse notées au moyen du signal $S_n$ tel que $s_n \in \mathbb{C}^{K \times 1}$ comprennent des éléments indépendants de puissance unitaire, tel que $E\{\|s_n\|^2\} = 1$.

Il est à noter que classiquement les systèmes OFDM définissent une bande de garde de sous-porteuses inutilisées, localisée à chaque extrémité de la bande spectrale utilisée. Ainsi, l'ensemble de sous-porteuses disponibles est divisé en deux ensembles complémentaires, l'un utilisé pour la transmission de données et son ensemble complémentaire utilisé pour la bande de garde dans laquelle aucune donnée n'est transmise.

En particulier, par la suite on note $h_{l,k,n} \in \mathbb{C}^{M \times 1}$ la réponse du canal dans le domaine fréquentiel entre le $l^{ième}$ point d'accès et l'utilisateur k sur la $n^{ième}$ sous-porteuse avec n=0, ..., N-1. Les canaux sont modélisés à l'aide de l'évanouissement indépendant de Rayleigh, i.e. chaque canal $h_{l,k,n} \sim CN$, $\beta_{l,k}I_M$), où $\beta_{l,k}$ est le coefficient d'évanouissement à grande échelle entre le $l^{ième}$ point d'accès AP et le $k^{ième}$ utilisateur UE (de l'anglais User Equipement), indépendant des antennes ou des sous-porteuses mise en œuvre.

De plus, par la suite on considère des canaux à évanouissement par blocs, qui sont constants pendant un intervalle temps-fréquence, connu sous le nom d'intervalle de cohérence, et qui varient indépendamment entre les intervalles de cohérence.

En outre, il est également supposé par la suite que les coefficients d'évanouissement à grande échelle varient lentement, dans une fourchette de plusieurs intervalles de cohérence, ce qui rend évident de considérer que les gains du canal sont connus *a priori* à chaque point d'accès et sont utilisés pour estimer les réponses courantes du canal.

L'ensemble 40 de modules électroniques est organisé en M chaînes de traitement numérique du signal associés à chacun desdits M émetteurs du point d'accès 10 considéré, chaque émetteur étant optionnellement un émetteur OFDM.

Un tel ensemble 40 comprend notamment sur l'exemple d'architecture numérique de la figure 2, un module 42 de précodage propre à mettre en œuvre un précodage local linéaire distribué.

Plus précisément, le précodage mis en œuvre par le module 42 de précodage est nécessaire pour être mis en œuvre au niveau de chaque point d'accès afin de supprimer l'interférence multi-utilisateur MUI (de l'anglais multi-user interference) au niveau des récepteurs. Au sein des réseaux CF-mMIMO-OFDM, la nature locale des précodeurs (i.e. module de précodage 42) est cruciale pour préserver une « scalabilité » (de l'anglais *scalability,* un réseau scalable étant un réseau dont la complexité de calcul reste finie en étendant géographiquement le réseau et en augmentant le nombre d'utilisateurs) de système, c'est pourquoi par la suite la notion de « précodage local » (i.e. localement au sein du point d'accès) est utilisée.

Plus précisément, par la suite on considère une mise en œuvre distribuée par le module 42 de précodage de chaque point d'accès, sans partage d'information entre points d'accès, et, au niveau de ce module de précodage 42 en tant que tel, sans se préoccuper de la distorsion de signal causée par les imperfections matérielles du point d'accès précédant le point d'accès courant considéré.

Chaque filtre de précodage local est de type MRT (de l'anglais *Maximum Ratio Transmission*) à savoir le précodage de transmission à rapport maximal, FZF (de l'anglais *Full pilot zero forcing*) à savoir le forçage à zéro pour les pilotes ou RZF la version régularisée de FZF à savoir le forçage à zéro régularisé, le vecteur précodé dans le domaine fréquentiel propre à être transmis par le point d'accès d'indice I sur la sous-porteuse d'indice n est exprimé sous la forme suivante :

$$x_{l,n} = W_{l,n}P_l s_n \qquad (1)$$

où :

- $W_{l,n} \epsilon \mathbb{C}^{M \times K}$ est la matrice de précodage associée à la sous-porteuse d'indice n pour le point d'accès d'indice I,

- $P_l \epsilon \mathbb{C}^{K \times K}$, qui est indépendant fréquentiellement, représente une matrice diagonale dont les éléments $\sqrt{\eta_{l,k}}$, tel que k=1,..., K sont les puissances de transmission normalisées allouées aux K utilisateurs.

- $s_n \epsilon \mathbb{C}^{K \times 1}$ est le vecteur de données à transmettre aux K utilisateurs sur la sous-porteuse n.

Plus précisément, le vecteur de précodage $w_{l,n,k} \epsilon \mathbb{C}^{M \times 1}$ employé par le I[ième] point d'accès vers le k[iéme] utilisateur sur la sous-porteuse n est exprimé sous la forme :

$$w_{l,n,k} = \begin{cases} \widehat{H}_{l,n}(\widehat{H}_{l,n}^{H}\widehat{H}_{l,n})^{-1}C_l e_k, & pour\ un\ filtrage\ local\ FZF \\ \widehat{H}_{l,n}(\widehat{H}_{l,n}^{H}\widehat{H}_{l,n} + P_l^{-1})^{-1}C_l e_k, & pour\ un\ filtrage\ local\ RZF \end{cases} \qquad (2)$$

où :

- $C_l \epsilon \mathbb{C}^{K \times K}$ est une matrice de normalisation satisfaisant $\{E\{\|w_{l,n,k}\|^2\} = 1, \forall k\}$,

- $\widehat{H}_{l,n} \epsilon \mathbb{C}^{M \times K}$ est la matrice d'estimation de canal entre le point d'accès d'indice I (i.e. le I[ième] point d'accès) et les K utilisateurs sur la sous-porteuse n, qui peut également être exprimée sous la forme : $\widehat{H}_{l,n} = [\hat{h}_{l,n,1}, ..., \hat{h}_{l,n,K}]$, et représentée par la flèche verticale descendante entrante dans le module de précodage 42, en considérant notamment des canaux sélectifs en fréquence, l'estimation de canal est en effet mise en œuvre localement à chaque point d'accès pour préserver la scalabilité du réseau, c'est pourquoi l'erreur moyenne quadratique minimale locale MMSE (de l'anglais minimum mean-squared error) d'estimation de canal $\hat{h}_{l,k,n}$ du canal $h_{l,k,n}$ est propre à être calculée tel que décrit par G. Interdonato et al. dans l'article « Local Partial Zero-Forcing Precoding for Cell-Free Massive MIMO » IEEE Transactions on Wireless Communications, vol. 19, no. 7, pp. 4758-4774, 2020 avec la transmission pilote sur la liaison montante.

- $\boldsymbol{P}_l \epsilon \mathbb{R}^{K \times K}$ est une matrice de régularisation diagonale,
- $\boldsymbol{e}_k$ est la k$^{ième}$ colonne de la matrice identité de la matrice identité $I_k$ ce qui revient par la suite à prendre la k$^{ième}$ colonne de $\hat{H}_{l,n}(\hat{H}_{l,n}{}^H \hat{H}_{l,n})^{-1} \boldsymbol{C}_l$.

Il est à noter que classiquement les schémas de précodage sont connus de l'homme du métier tels que notamment décrits par G. Interdonato et al. dans l'article « Local Partial Zero-Forcing Precoding for Cell-Free Massive MIMO » IEEE Transactions on Wireless Communications, vol. 19, no. 7, pp. 4758-4774, 2020, c'est pourquoi ces schémas ne sont pas davantage détaillés par la suite car connus et ne faisant pas l'objet de l'invention en tant que tels.

Tel qu'illustré par la figure 2, en sortie du module de précodage 42, M chaînes de transmission radiofréquence sont mise en œuvre, chaque chaine étant associée à un émetteur distinct, notamment un émetteur OFDM.

En particulier, chaque chaine comprend classiquement tout d'abord en sortie du module de précodage 42 un module 44 d'application d'une transformée de Fourier rapide inverse (de l'anglais Inverse Fast Fourier Transform) de taille $M_{FFT}$, sous-porteuses OFDM est inférieur ou égal à la taille $M_{FFT}$ de la transformée de Fourier rapide inverse, si bien qu'en cas d'infériorité stricte les entrées de la transformée de Fourier rapide inverse sont complétées par des zéros tel qu'illustré par la figure 2.

Puis en sortie du module 44 d'application d'une transformée de Fourier rapide inverse, chaque chaine comprend classiquement un multiplexeur 46

Spécifiquement selon la présente invention, chaque chaine est par ailleurs complétée des éléments 48, 50 et 52 permettant de déterminer la distorsion de signal causée par les imperfections matérielles de chaque chaine de transmission.

En effet, chaque chaine de transmission radiofréquence comprenant en outre classiquement un convertisseur numérique-analogique DAC (de l'anglais Digital to Analog Converter) 54, un émetteur 56, notamment un émetteur OFDM noté RF Tx sur la figure 2, et un amplificateur de puissance 58, est classiquement non linéaire du fait d'imperfections matérielles, telles que par exemple causées par une quantification basse résolution ou encore par des amplificateurs de puissance non linéaires.

Par exemple, le signal transmis par l'antenne d'indice m du point d'accès d'indice I est exprimé sous la forme suivante :

$$\boldsymbol{z}_{l,m}^t = f\left(\boldsymbol{a}_{l,m}^t\right) \qquad (3)$$

où f(.) représente l'opération non linéaire supposée sans mémoire et identique pour toutes les antennes de tous les points d'accès de la liaison fronthaul considérée, pour des raisons de simplicité appliquée aux signaux modulés $\left\{\boldsymbol{a}_{l,m}^t, \forall m\right\}$ transmis à chaque antenne du point d'accès au travers des M chaines de transmission radiofréquence.

A noter que selon le théorème de Bussgang tel qu'introduit par R. Price dans l'article intitulé « A useful theorem for nonlinear devices having Gaussian inputs » IRE Transactions on Information Theory, vol. 4, no. 2, pp. 69-72, 1958, le signal OFDM dans le domaine temporel est exprimé à la sortie de la fonction non linéaire par la décomposition unique suivante :

$$\boldsymbol{z}_{l,m}^t = K_0 \boldsymbol{a}_{l,m}^t + \boldsymbol{d}_{l,m}^t$$

où $K_0$ est un gain complexe fréquentiellement indépendant et $\boldsymbol{d}_{l,m}^t$ est une distorsion (i.e. un bruit) de moyenne nulle avec une variance $\sigma_d^2$ décorrélé de chaque signal modulé $\boldsymbol{a}_{l,m}^t$ non gaussien à l'émission mais devenant gaussien coté réception après démodulation OFDM.

$K_0$ et $\sigma_d^2$ constituent les paramètres d'imperfections matérielles et sont propres à être déterminés analytiquement si bien que la présente invention propose de déterminer la distorsion de signal associée :

- en transmettant, le signal précodé modulé de chaque chaine, obtenu en sortie du multiplexeur 46, en entrée d'un modèle matériel 48 de la chaine de transmission considérée, appelé HWI_M, et
- en soustrayant, via l'élément 50, la sortie du modèle matériel 48 du signal précodé modulé en entrée du multiplexeur 46, puis
- en démodulant, via le module 52 d'application d'une transformation de Fourier rapide FFT (de l'anglais Fast Fourier Transform) pour obtenir la distorsion exprimée dans le domaine fréquentiel.

En complément optionnel, ledit modèle matériel 48 de la chaine de transmission de chaque émetteur est modélisé en utilisant au moins une mesure prédéterminée et/ou une optimisation prédéterminée, notamment mathématique, ce qui permet de développer des modèles de caractérisation des imperfections matérielles.

En complément optionnel, tel qu'illustré par la figure 2, lorsque le point d'accès comprend une pluralité d'émetteurs actifs simultanément, ladite information représentative d'une distorsion de signal causée par les propres imperfections matérielles correspondant à la concaténation de la distorsion de signal causée par les propres imperfections matérielles de chacun des émetteurs de ladite pluralité.

Autrement dit, pour un échantillon donné, la distorsion générée par un émetteur est représentée par un coefficient $d_{l,m}^t$. Par conséquent, la distorsion générée par M émetteurs est un vecteur de dimension M comportant les M coefficients de distorsion générés par les M émetteurs.

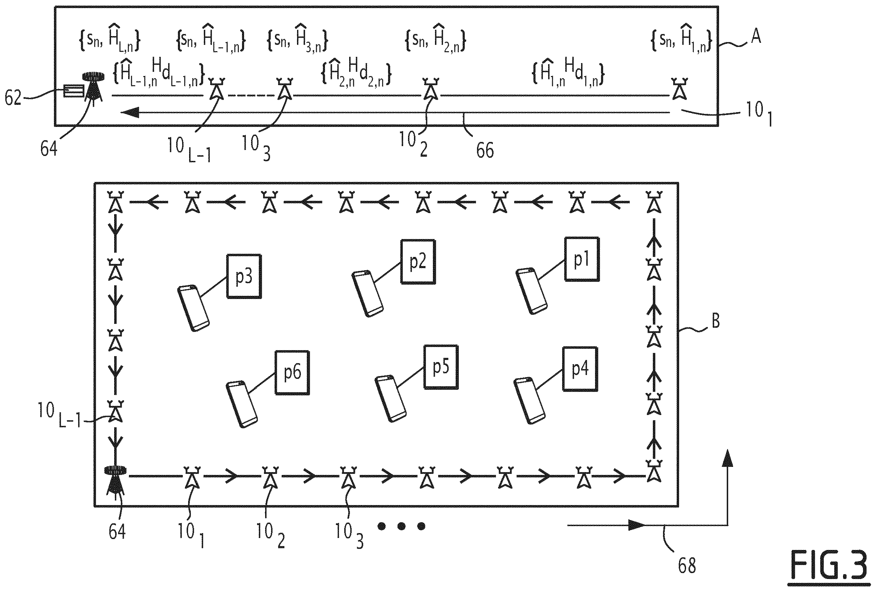

La figure 3 est une représentation schématique de deux modes de réalisation de liaison fronthaul d'un réseau MIMO massif distribué et sans cellule et du rôle joué par chacun des points d'accès, selon la présente invention, de la pluralité de points d'accès en série qui compose une telle liaison fronthaul.

Plus précisément, la technique de duplex par séparation temporelle TDD (de l'anglais time-division duplex) permet de séparer les transmissions de la voie de communication descendante DL (de l'anglais downlink) de celles de la voie de communication montante UL (de l'anglais uplink) selon l'hypothèse d'une réciprocité parfaite des canaux, qui peut être assurée par des méthodes d'étalonnage précises connues de l'homme du métier. De plus, la transmission d'une trame selon la technique TDD au sein d'un réseau CF-mMIMO-OFDM est mise en œuvre dans l'intervalle de cohérence et la largeur du bloc de ressources physiques RB (de l'anglais resource block) est inférieure à la largeur de bande de cohérence.

Par la suite, pour être conforme à la norme 5G NR, considérons notamment une trame radio dont la ressource temps-fréquence est divisée en $N_{rb}$ blocs de ressources RB. Chaque bloc de ressource comprend $N_{sc} = \frac{N}{N_{rb}}$ sous-porteuses consécutives. On note $(t, n)_{l,m}$ l'unité de ressource RU (de l'anglais resource unit) qui représente la plus petite ressource temps-fréquence de la $n^{ième}$ sous-porteuse du $t^{ième}$ symbole OFDM correspondant à la $m^{ième}$ antenne du $l^{ième}$ point d'accès.

Par exemple, une telle trame TDD comprend classiquement $N_c$ symboles OFDM ce qui correspond à l'intervalle de cohérence le plus court de tous les utilisateurs, et à la transmission de : $\tau_c = N_{sc}N_c$ unités de ressource RU par bloc de ressources RB, où $\tau_p$ unités de ressources parmi les $\tau_c$ unités de ressources sont utilisées comme pilotes qui sont distribués au sein de la charge utile de transmission sur la voie de communication montante UL. De tels pilotes sont notamment utilisés classiquement pour estimer MxK canaux dans le domaine fréquentiel, par bloc ressource, au sein de chaque point d'accès. Aussi, $N_D = N_{sc}N_c - \tau_p$ unités de ressources sont réservées, par bloc ressource, aux données utiles dans les échantillons, qui sont scindées entre les transmissions de la voie de communication descendante DL et celles la voie de communication montante UL (de l'anglais uplink) en deux parties complémentaires $\varepsilon N_D$ et $(1 - \varepsilon)N_D$ respectivement avec $0 < \varepsilon < 1$.

Plus précisément, sur la figure 3, deux modes de réalisation A et B de liaisons fronthaul sont représentés, une liaison fronthaul correspondant, par définition selon la présente invention, à la liaison d'interconnexion des points d'accès avec l'unité centrale 62 d'une station de base 64, et ce pour corriger de proche en proche, via ladite liaison fronthaul la distorsion de signal causée par les imperfections matérielles de chaque point d'accès lors de la mise en œuvre de la communication sur la voie de communication descendante DL (de l'anglais downlink) du réseau MIMO massif distribué et sans cellule.

Sur la figure 3, selon le mode de réalisation A, la liaison fronthaul présente une extrémité constituée par un point d'accès $10_1$ et une autre extrémité constituée par l'unité centrale 62 de la station de base 64, les L points d'accès $10_1$, $10_2$, $10_3$, ...,$10_L$ la constituant étant en série ordonnés selon un sens 66 de parcours prédéterminé de ladite liaison fronthaul jusqu'à l'unité centrale 62 de la station de base.

Selon le mode de réalisation B, la liaison fronthaul forme un cadre autour de K utilisateurs, par exemple K=6 pour les utilisateurs illustrés par les terminaux p1, p2, p3, p4, p5, p6 répartis arbitrairement dans la zone de couverture, et comprend également L points d'accès, tel que L >> K, en série ordonnés selon un sens 68 de parcours prédéterminé de ladite liaison fronthaul débutant par exemple par le point d'accès $10_1$, puis $10_2$, $10_3$,..., jusqu'au point d'accès $10_L$ puis l'unité centrale 62 de la station de base (à noter que selon un autre cas le sens 68 pourrait être inverse).

A noter que d'une manière générale, un réseau CF-mMIMO est propre à être divisé en plusieurs liaisons (i.e. segments) fronthaul correspondant à des points d'accès liés en série via une liaison fronthaul, et le traitement est appliqué pour chaque segment, par exemple un segment selon le mode de réalisation A et/ou un segment selon le mode de réalisation B d'une manière indépendante d'un segment à l'autre, ou selon toute autre topologie de réseau connue.

Le signal reçu au niveau du $k^{iéme}$ utilisateur via la $n^{ième}$ sous-porteuse est notamment exprimé sous la forme suivante :

$$y_{k,n} = \sum_{l=1}^{L} \boldsymbol{h}_{l,k,n}^{H} \boldsymbol{z}_{l,n} + b_{k,n} = \sum_{l=1}^{L} \boldsymbol{h}_{l,k,n}^{H} \boldsymbol{K}_0 \boldsymbol{x}_{l,n} + \sum_{l=1}^{L} \boldsymbol{h}_{l,k,n}^{H} \boldsymbol{d}_{l,n} + b_{k,n} \qquad (5)$$

où $\boldsymbol{z}_{l,n} \in \mathbb{C}^{M \times 1}$ désigne le signal amplifié, exprimé dans le domaine fréquentiel, transmis par le point d'accès d'indice l sur la sous-porteuse n, $\boldsymbol{d}_{l,n} \in \mathbb{C}^{M \times 1}$ désigne la distorsion de signal (i.e. le bruit de distorsion) causé par les imperfections matérielles, $\boldsymbol{K}_0$ est la matrice diagonale MxM dont les éléments sont égaux à $K_0$ tel qu'introduit précédemment, et $b_{k,n} \sim CN$ identiquement distribuées (i.e. i.i.d).

De plus, par bloc ressource et par utilisateur, l'efficacité spectrale SE (de l'anglais spectral efficiency) est propre à être calculée tel que décrit par W. Jiang dans l'article « Cell-Free Massive MIMO-OFDM Transmission Over Frequency-Selective Fading Channels » IEEE Communications Letters, vol. 25, no. 8, pp. 2718-2722, 2021 sous la forme

$$SE_k = \xi \left(1 - \frac{\tau_p}{N_{sc}N_c}\right) N_{sc} \Delta f \log_2\left(1 + SINR_{k,n}\right) \qquad (6)$$

avec $SINR_{k,n}$ le rapport signal/interférence plus bruit (de l'anglais signal-to interference-plus-Noise Ratio) du k[iéme] utilisateur en utilisant la sous-porteuse n exprimé sous la forme suivante :

$$SINR_{k,n} = \frac{\left|\sum_{l=1}^{L} \sqrt{\eta_{l,k}} \, \mathbb{E}\{\boldsymbol{h}_{l,k,n}^{H} \boldsymbol{K}_0 \boldsymbol{w}_{l,k,n}\}\right|^2}{\sum_{t=1}^{K} \mathbb{E}\left\{\left|\sum_{l=1}^{L} \sqrt{\eta_{l,t}} \, \boldsymbol{h}_{l,k,n}^{H} \boldsymbol{K}_0 \boldsymbol{w}_{l,n,t}\right|^2\right\} - \left|\sum_{l=1}^{L} \sqrt{\eta_{l,k}} \, \mathbb{E}\{\boldsymbol{h}_{l,k,n}^{H} \boldsymbol{K}_0 \boldsymbol{w}_{l,k,n}\}\right|^2 + \Psi_{k,n} + 1}$$

avec :

$$\Psi_{k,n} = \mathbb{E}\left\{\left|\sum_{l=1}^{L} \boldsymbol{h}_{l,k,n}^{H} \boldsymbol{d}_{l,n} - \sum_{l=1}^{L-1} C'_l \boldsymbol{h}_{l+1,k,n}^{H} \boldsymbol{w}_{l+1,k,n} \, \widehat{\boldsymbol{h}}_{l,k,n}^{H} \boldsymbol{d}_{l,n}\right|^2\right\}$$

et $C'_l$ est un facteur de normalisation.

Comme indiqué précédemment en relation avec les figures 1 et 2, les point d'accès, adaptés (i.e. modifiées) selon la présente invention, et liés en série via une liaison fronthaul, offrent des capacités importantes, de limitation (i.e. réduction) en cas d'imperfections matérielles sévères, voire avantageusement d'annulation (ou de compensation) des imperfections matérielles causée par chaque point d'accès de la liaison fronthaul considérée, ces imperfections étant grandement causées par les amplificateurs de puissance 58 et convertisseurs numérique-analogique 54 de chaque chaine de transmission associées à chaque émetteur 56 de chaque point d'accès 10 tel qu'illustré précédemment en relation avec la figure 2.

La figure 3 illustre plus précisément l'information transmise sur chaque segment fronthaul.permettant la limitation, voire suppression, de proche en proche le long de la liaison fronthaul des distorsions de signal causées par les imperfections matérielles de chaque point d'accès.

Plus précisément, selon la présente invention, il est tout d'abord considéré que chaque point d'accès calcule classiquement localement des estimations de canal locales à partir des séquences pilotes transmises par chaque utilisateur, et les utilise spécifiquement selon la présente invention pour précoder les données utiles aux utilisateurs desservis, de sorte que les signaux transmis par tous les points d'accès s'additionnent de manière constructive au niveau des antennes des terminaux utilisateurs et ce en limitant, voire annulant, avantageusement distorsions de signal causées par les imperfections matérielles de chaque point d'accès.

Autrement dit tel qu'illustré par la figure 3, la présente invention exploite l'architecture en série de la liaison (i.e. segment) fronthaul en série pour mettre en œuvre une limitation (en cas d'imperfection matérielle sévères), voire une suppression des distorsions de signal causées par les imperfections matérielles de chaque point d'accès.

Sur les exemples de segment fronthaul A et B de la figure 3, le premier point d'accès $10_1$ de la liaison fronthaul selon un sens de parcours prédéterminé 66 ou 68 jusqu'à l'unité centrale 62 détermine tout d'abord, classiquement, des filtres de précodage locaux basés sur (i.e. utilisant) les estimations de canal locales entre ce premier point d'accès $10_1$ et chaque utilisateur k, illustrés chacun par exemple par les terminaux utilisant les pilotes p1, p2, p3, p4, p5, p6 de la figure 3.

Comme indiqué précédemment, ces filtres de précodages locaux sont de type MRT, FZF ou encore RZF, le vecteur précodé dans le domaine fréquentiel propre à être transmis, par voie radio, par le point d'accès d'indice l sur la sous-porteuse d'indice n étant, comme indiqué précédemment, exprimé sous la forme suivante : $\boldsymbol{x}_{l,n} = \boldsymbol{W}_{l,n}\boldsymbol{P}_l\boldsymbol{s}_n$.

Puis, comme indiqué précédemment en relation avec les figures 1 et 2, le premier point d'accès $10_1$, est également propre, spécifiquement selon la présente invention, à approximer (i.e. déterminer) la distorsion de signal causée par ses propres imperfections matérielles $\{d_{1,n}, \forall n\}$, cette distorsion $d_{1,n}$ étant *de facto* également transmise par le premier point d'accès 10, à chaque utilisateur k par voie radio.

Côté utilisateur, les distorsions de signal causées par les propres imperfections matérielles du premier point d'accès $10_1$, effectivement reçues après que les signaux précodés dans le domaine fréquentiel $\{x_{1,n}, \forall n\}$ aient été créés, modulés, soient passés par chaque chaine radiofréquence du premier point d'accès puis transmis via les canaux utilisateurs, peuvent être exprimées sous la forme $\{\widehat{H}^H_{1,n} d_{1,n}, \forall n\}$, et comme illustré par la figure 3, notamment sur le segment fronthaul de type A, le premier point d'accès $10_1$ transmet ces distorsions de signal $\{\widehat{H}^H_{1,n} d_{1,n}, \forall n\}$ au point d'accès suivant $10_2$ selon le sens 66 de parcours de ladite liaison fronthaul, et ce via ladite liaison fronthaul. Les modules de transmission 14 et de réception 16 précédemment cités en relation avec la figure 1 sont donc des modules de transmission et/ou de réception via la liaison fronthaul et non via une voie radio telle que celle utilisée pour communiquer avec les utilisateurs. Autrement dit, avantageusement, K échantillons complexes pour chaque sous-porteuse d'indice n, vont être transmis par le premier point d'accès $10_1$ au deuxième point d'accès $10_2$, et ce en utilisant le segment fronthaul.

Puis, lorsque le point d'accès d'indice l avec $l \in [1, L]$, par exemple $l = 2$ pour le deuxième point d'accès $10_2$, reçoit, via la liaison fronthaul, les distorsions de signal $\{\widehat{H}^H_{l-1,n} d_{l-1,n}, \forall n\}$ reçues côté utilisateur en provenance du point d'accès précédent d'indice l-1, le long de la liaison série fronthaul, ce point d'accès d'indice l exploite cette information $\{\widehat{H}^H_{l-1,n} d_{l-1,n}, \forall n\}$ conjointement avec ses propres estimations de canal locales $\{\widehat{H}^H_{l,n}, \forall n\}$ pour à son tour déterminer ses filtres de précodage locaux, de sorte que ces derniers puisse permettre du côté des K utilisateurs une construction cohérente des signaux utiles tout en supprimant les distorsions de signal causées par les imperfections matérielles du point d'accès d'indice l-1 le précédant.

Ainsi, les signaux $x_{l,n}$ précodés optimaux dans le domaine fréquentiel propres à être transmis par le $l^{\text{ième}}$ point d'accès sur la sous-porteuse n à destination des K utilisateurs est exprimé par l'unique solution :

$$x_{l,n} = W_{l,n} P_l s_n - W_{l,n} C'_l \widehat{H}^H_{l-1,n} d_{l-1,n} \quad \text{où} \quad C'_l \in \mathbb{C}^{K \times K}$$

est une matrice de normalisation satisfaisant

$$\left\{ E\left\{ \left\| \widehat{H}^H_{l,n} w_{l,n} \right\|^2 \right\} = I_k, \forall k \right\}$$

pouvant être optimisée au moyen d'une matrice diagonale optimale dont les éléments sont $\frac{1}{\sqrt{(M-K)\beta_{l,k}}}$, k=1, …, K.

Comme illustré sur la figure 3, le $l^{\text{ième}}$ point d'accès, par exemple pour $l = 2$, le deuxième point d'accès $10_2$, transmet à son tour, via la liaison fronthaul, les distorsions de signal effectivement reçues par les K utilisateur et causées par ses propres imperfections exprimées sous la forme $\{\widehat{H}^H_{l,n} d_{l,n}, \forall n\}$, (ce qui revient à $\{\widehat{H}^H_{2,n} d_{2,n}, \forall n\}$ pour le deuxième point d'accès $10_2$ d'indice $l = 2$) au point d'accès d'indice l+1, par exemple pour $l = 2$, le point d'accès $10_3$ d'indice $l + 1 = 3$, et ainsi de suite répété en série (i.e. de proche en proche) le long de la liaison fronthaul jusqu'à atteindre l'unité centrale 62.

Selon la présente invention, l'unité centrale 62 d'une station de base 64 d'un réseau MIMO massif distribué et sans cellule, associée à au moins une liaison fronthaul comprenant une pluralité de points d'accès en série, tels que décrit précédemment en relation avec les figures 1 et 2, et ordonnés selon un sens de parcours prédéterminé de ladite liaison fronthaul jusqu'à ladite unité centrale, comprend également, spécifiquement selon la présente invention, au moins un module de réception configuré pour recevoir, via ladite liaison fronthaul, une information représentative $\{\widehat{H}^H_{L-1,n} d_{L-1,n}, \forall n\}$ d'une distorsion de signal causée par les imperfections matérielles du point d'accès d'indice L-1 la précédant directement au sein de ladite liaison fronthaul, et pour prendre en compte ladite information pour déterminer les filtres de précodage locaux de ladite unité centrale configurés de sorte à permettre du côté des K utilisateurs une construction cohérente des signaux utiles $\{s_n\}$ Vn tout en supprimant , ladite distorsion de signal $\{\widehat{H}^H_{L-1,n} d_{L-1,n}, \forall n\}$ causée par les imperfections matérielles dudit point d'accès d'indice L-1 la précédant.

Ainsi, l'unité centrale 62 de la station de base (ou dernier point d'accès dans la liaison fronthaul) contribue dans la compensation des distorsions générées par son point d'accès prédécesseur.

En ce qui concerne la distorsion générée par la station de base 64 elle-même, il est à noter que, selon une première variante, cette distorsion générée par la station de base 64 elle-même est considérée comme acceptable car ayant peu d'impact sur la performance globale du système, ou selon une deuxième variante, que du fait que le matériel utilisé dans la station de base est plus performant (plus couteux et plus consommateur d'énergie) la distorsion générée par la station de base 64 elle-même est également considérée comme négligeable.

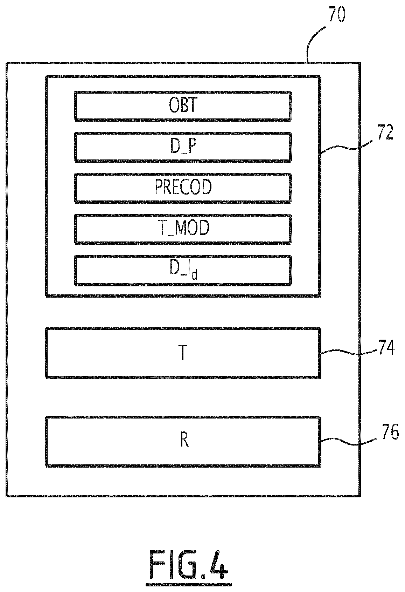

On décrit par la suite en relation avec la figure 4, un exemple de mode de réalisation du fonctionnement, selon la présente invention, d'un point d'accès d'une liaison fronthaul d'un réseau MIMO massif distribué et sans cellule selon la présente invention.

Plus précisément, le procédé 70 de limitation de la distorsion de signal causée par les imperfections matérielles d'une pluralité de points d'accès d'une liaison fronthaul d'un réseau MIMO massif distribué et sans cellule, est mis en œuvre par chaque point d'accès de ladite liaison fronthaul ou par ladite unité centrale, et mis en œuvre lors de la communication sur la voie de communication descendante dudit réseau MIMO massif distribué et sans cellule.

Le procédé 70 comprend, lorsqu'il est mis en œuvre par chaque point d'accès $10_1$ à $10_{L-1}$ de ladite liaison fronthaul, tout d'abord une étape 72 de détermination d'une information représentative d'une distorsion de signal causée par les propres imperfections matérielles dudit point d'accès.

De plus, lorsque le procédé 70 est mis en œuvre par chaque point d'accès 10, à $10_{L-1}$ de ladite liaison fronthaul, le procédé comprend en outre une étape 74 de transmission T, via ladite liaison fronthaul, de ladite information représentative de ladite distorsion de signal causée à un autre point d'accès, ou à l'unité centrale d'une station de base, le suivant directement au sein d'une liaison fronthaul comprenant une pluralité de points d'accès en série ordonnés selon un sens de parcours prédéterminé de ladite liaison fronthaul.

Enfin, lorsque le procédé 70 est mis en œuvre par chaque point d'accès de ladite liaison fronthaul, d'indice $2 \leq l \leq L$ - 1 $10_2$ à $10_{L-1}$, ou lorsqu'il est mis en œuvre par l'unité centrale 62 (dernier point d'accès dans la liaison fronthaul), le procédé 70 comprend en outre une étape 76 de réception R, via ladite liaison fronthaul, et de prise en compte de ladite information représentative d'une distorsion de signal causée par les imperfections matérielles d'un point d'accès le précédant directement au sein de ladite liaison fronthaul pour déterminer les filtres de précodage locaux dudit point d'accès ou de ladite unité centrale configurés pour annuler ladite distorsion de signal causée par les imperfections matérielles dudit point d'accès le précédant.

En complément optionnel tel qu'illustré par l'exemple de la figure 4, ladite étape 72 de détermination comprend l'obtention OBT d'une estimation locale du canal de propagation entre chacun de ses émetteurs et chaque terminal utilisateur à sa portée au sein dudit réseau MIMO massif distribué et sans cellule.

De plus, ladite étape 72 de détermination comprend la détermination D_P de la puissance allouée à chaque signal de données propre à être transmis entre ledit point d'accès et chaque terminal utilisateur à sa portée au sein dudit réseau MIMO massif distribué et sans cellule.

En outre, ladite étape 72 de détermination comprend le précodage PRECOD de chaque signal de données propre à être transmis entre chacun de ses émetteurs et chaque terminal utilisateur à sa portée au sein dudit réseau MIMO massif distribué et sans cellule, en fonction de ladite estimation locale et de ladite puissance allouée associées.

Ladite étape 72 de détermination comprend également la transmission T_MOD de chaque signal précodé en entrée d'un modèle matériel de la chaine de transmission de son émetteur associé.

Enfin, ladite étape 72 de détermination comprend la détermination $D\_I_d$ de ladite information représentative de la distorsion de signal causée par les propres imperfections matérielles dudit émetteur par comparaison de la sortie dudit modèle matériel et dudit signal précodé d'entrée.

L'homme du métier comprendra que l'invention ne se limite pas aux modes de réalisation décrits, ni aux exemples particuliers de la description. Elle se limite seulement par l'étendue des revendications.

La présente invention permet ainsi de proposer une solution efficace pour les technologies MIMO distribuée/-sans cellule qui sont actuellement les technologies les plus prometteuses pour accompagner l'avenir de l'industrie 4.0 dans laquelle les réseaux et applications privés/industriels avec un déploiement rapide d'infrastructure d'accès sans fil et une faible consommation énergétique sont des enjeux importants.

Le traitement séquentiel, proposé selon la présente invention, en exploitant la liaison fronthaul, tire à la fois profit des connexions séries de cette liaison fronthaul, et des dernières avancées en termes de schémas de précodage distribués pour offrir ainsi des améliorations de performances radicales dans l'atténuation des imperfections matérielles de chaque point d'accès de ladite liaison fronthaul, ce qui rend pratique et utile la mise en œuvre de réseaux de type MIMO massif distribué et sans cellule, utilisant notamment une modulation multi-porteuse, notamment OFDM, ces réseaux étant connus sous le nom abrégé CF-mMIMO-OFDM.

Enfin la présente invention vise répondre au moins en partie à la forte demande de solutions « vertes » de traitement de signal en raison des préoccupations liées à la pérennisation du secteur des télécommunications et, de manière correspondante à la diminution des émissions de dioxyde de carbone associées, ce qui permet d'économiser de l'énergie et de réduire la pollution de l'environnement.

**Revendications**

1. Point d'accès (10) d'un réseau MIMO massif distribué et sans cellule, comprenant au moins les trois modules suivants:

   - un module de détermination (12) configuré pour déterminer une information représentative d'une distorsion de signal causée par les propres imperfections matérielles dudit point d'accès,
   - un module de transmission (14) configuré pour transmettre, via une liaison fronthaul comprenant une pluralité de points d'accès en série ordonnés selon un sens de parcours prédéterminé de ladite liaison fronthaul jusqu'à l'unité centrale d'une station de base, ladite information représentative de ladite distorsion de signal à un autre point d'accès, ou à l'unité centrale, le suivant directement au sein de ladite liaison fronthaul;
   - un module de réception (16) configuré pour recevoir, via ladite liaison fronthaul, une information représentative d'une distorsion de signal causée par les imperfections matérielles d'un point d'accès le précédant directement au sein de ladite liaison fronthaul, et pour la prendre en compte pour déterminer les filtres de précodage locaux dudit point d'accès configurés pour annuler ladite distorsion de signal causée par les imperfections matérielles dudit point d'accès le précédant.

2. Point d'accès (10) selon la revendication 1, **caractérisé en ce que**, pour déterminer ladite information représentative de la distorsion de signal, ledit module de détermination (12) du point d'accès est configuré pour :

   - obtenir une estimation locale du canal de propagation entre chacun de ses émetteurs et chaque terminal utilisateur à sa portée au sein dudit réseau MIMO massif distribué et sans cellule,
   - déterminer la puissance allouée à chaque signal de données propre à être transmis entre ledit point d'accès (10) et chaque terminal utilisateur à sa portée au sein dudit réseau MIMO massif distribué et sans cellule,
   - précoder chaque signal de données propre à être transmis entre chacun de ses émetteurs et chaque terminal utilisateur à sa portée au sein dudit réseau MIMO massif distribué et sans cellule, en fonction de ladite estimation locale et de ladite puissance allouée associées ;
   - transmettre chaque signal précodé en entrée d'un modèle matériel (48) de la chaine de transmission de son émetteur associé ;
   - déterminer ladite information représentative de la distorsion de signal causée par les propres imperfections matérielles dudit émetteur par comparaison de la sortie dudit modèle matériel et dudit signal précodé d'entrée.

3. Point d'accès (10) selon la revendication 2, **caractérisé en ce que** ledit modèle matériel (48) de la chaine de transmission de chaque émetteur est modélisé en utilisant au moins une mesure prédéterminée et/ou une optimisation prédéterminée.

4. Point d'accès (10) selon l'une quelconque des revendications 1 à 3, **caractérisé en ce qu'**il comprend une pluralité d'émetteurs actifs simultanément, ladite information représentative d'une distorsion de signal causée par les propres imperfections matérielles correspondant à la concaténation de la distorsion de signal causée par les propres imperfections matérielles de chacun des émetteurs de ladite pluralité.

5. Point d'accès (10) selon l'une quelconque des revendications 2 à 4, **caractérisé en ce que** chaque émetteur est un émetteur OFDM.

6. Point d'accès (10) selon l'une quelconque des revendications précédentes, **caractérisé en ce que** chaque filtre de précodage local est de type précodage de transmission à rapport maximal MRT, forçage à zéro pour les pilotes FZF ou forçage à zéro régularisé RZF.

7. Unité centrale (62) d'une station de base (64) d'un réseau MIMO massif distribué et sans cellule, ladite unité centrale étant associée à au moins une liaison fronthaul comprenant une pluralité de points d'accès en série selon l'une quelconque des revendications précédentes et ordonnés selon un sens de parcours prédéterminé de ladite liaison fronthaul jusqu'à ladite unité centrale,
   ladite unité centrale de station de base comprenant au moins un module de réception configuré pour recevoir, via ladite liaison fronthaul, une information représentative d'une distorsion de signal causée par les imperfections matérielles d'un point d'accès la précédant directement au sein de ladite liaison fronthaul, et pour prendre en compte ladite information pour déterminer les filtres de précodage locaux de ladite unité centrale configurés pour annuler ladite distorsion de signal causée par les imperfections matérielles dudit point d'accès la précédant.

8. Réseau MIMO massif distribué et sans cellule comprenant au moins une liaison fronthaul, **caractérisé en ce que** ladite au moins une liaison fronthaul comprend une pluralité de points d'accès en série, selon l'une quelconque des revendications précédentes 1 à 6, et ordonnés selon un sens de parcours prédéterminé de ladite liaison fronthaul.

9. Procédé (70) de limitation de la distorsion de signal causée par les imperfections matérielles d'une pluralité de points d'accès d'une liaison fronthaul d'un réseau MIMO massif distribué et sans cellule, lesdits points d'accès de ladite pluralité étant connectés en série le long de ladite liaison fronthaul jusqu'à l'unité centrale d'une station de base et ordonnés selon un sens de parcours prédéterminé de ladite liaison fronthaul, ledit procédé étant mis en œuvre lors de la communication sur la voie de communication descendante dudit réseau MIMO massif distribué et sans cellule, ledit procédé comprenant au moins les étapes suivantes, lorsqu'il est mis en œuvre par le premier point d'accès de ladite liaison fronthaul :

- détermination (72) d'une information représentative d'une distorsion de signal causée par les propres imperfections matérielles dudit point d'accès, et
- transmission (74), via ladite liaison fronthaul, de ladite information représentative de ladite distorsion de signal causée à un autre point d'accès, ou à l'unité centrale d'une station de base, le suivant directement au sein d'une liaison fronthaul comprenant une pluralité de points d'accès en série ordonnés selon un sens de parcours prédéterminé de ladite liaison fronthaul ;
ou lorsqu'il est mis en œuvre par un point d'accès de ladite liaison fronthaul distinct dudit premier point d'accès et distinct de ladite unité centrale :

- détermination (72) d'une information représentative d'une distorsion de signal causée par les propres imperfections matérielles dudit point d'accès, et
- transmission (74), via ladite liaison fronthaul, de ladite information représentative de ladite distorsion de signal causée à un autre point d'accès, ou à l'unité centrale d'une station de base, le suivant directement au sein d'une liaison fronthaul comprenant une pluralité de points d'accès en série ordonnés selon un sens de parcours prédéterminé de ladite liaison fronthaul ; et
- réception (76), via ladite liaison fronthaul, et prise en compte d'une information représentative d'une distorsion de signal causée par les imperfections matérielles d'un point d'accès le précédant directement au sein de ladite liaison fronthaul pour déterminer les filtres de précodage locaux dudit point d'accès ou de ladite unité centrale configurés pour annuler ladite distorsion de signal causée par les imperfections matérielles dudit point d'accès le précédant,

ou lorsqu'il est mis en œuvre par ladite unité centrale :

- réception (76), via ladite liaison fronthaul, et prise en compte d'une information représentative d'une distorsion de signal causée par les imperfections matérielles d'un point d'accès le précédant directement au sein de ladite liaison fronthaul pour déterminer les filtres de précodage locaux dudit point d'accès ou de ladite unité centrale configurés pour annuler ladite distorsion de signal causée par les imperfections matérielles dudit point d'accès le précédant.

10. Procédé (70) selon la revendication 9, dans lequel ladite détermination d'une information représentative d'une distorsion de signal causée par les propres imperfections matérielles dudit point d'accès comprend :

- l'obtention d'une estimation locale du canal de propagation entre chacun de ses émetteurs et chaque terminal utilisateur à sa portée au sein dudit réseau MIMO massif distribué et sans cellule,
- la détermination de la puissance allouée à chaque signal de données propre à être transmis entre ledit point d'accès et chaque terminal utilisateur à sa portée au sein dudit réseau MIMO massif distribué et sans cellule,
- le précodage de chaque signal de données propre à être transmis entre chacun de ses émetteurs et chaque terminal utilisateur à sa portée au sein dudit réseau MIMO massif distribué et sans cellule, en fonction de ladite estimation locale et de ladite puissance allouée associées ;
- la transmission de chaque signal précodé en entrée d'un modèle matériel de la chaine de transmission de son émetteur associé ;
- la détermination de ladite information représentative de la distorsion de signal causée par les propres imperfections matérielles dudit émetteur par comparaison de la sortie dudit modèle matériel et dudit signal précodé d'entrée.

11. Programme d'ordinateur comportant des instructions logicielles qui, lorsqu'elles sont exécutées par un ordinateur, mettent en œuvre un procédé de limitation de la distorsion de signal causée par les imperfections matérielles d'une pluralité de points d'accès d'une liaison fronthaul d'un réseau MIMO massif distribué et sans cellule conforme aux revendications 9 ou 10.

**Patentansprüche**

1. Zugangspunkt (10) eines verteilten zellfreien Massive-MIMO-Netzes, umfassend mindestens die folgenden drei Module:

   - ein Bestimmungsmodul (12), das dazu konfiguriert ist, eine Information zu bestimmen, die repräsentativ für eine Signalverzerrung ist, die durch die eigenen Hardware-Imperfektionen des Zugangspunkts verursacht wird,
   - ein Übertragungsmodul (14), das dazu konfiguriert ist, über eine Fronthaul-Verbindung, die eine Vielzahl von in Serie angeordneten Zugangspunkten umfasst, die gemäß einer vorbestimmten Durchlaufrichtung der Fronthaul-Verbindung bis zu der zentralen Einheit einer Basisstation geordnet sind, die Information, die repräsentativ für die Signalverzerrung ist, an einen anderen Zugangspunkt oder an die zentrale Einheit zu übertragen, der bzw. die dem Zugangspunkt (10) innerhalb der Fronthaul-Verbindung direkt folgt;
   - ein Empfangsmodul (16), das dazu konfiguriert ist, über die Fronthaul-Verbindung eine Information zu empfangen, die repräsentativ für eine Signalverzerrung ist, die durch die Hardware-Imperfektionen eines innerhalb der Fronthaul-Verbindung dem Zugangspunkt (10) unmittelbar vorausgehenden Zugangspunkts verursacht wird, und diese zu berücksichtigen, um die lokalen Präkodierungsfilter des Zugangspunkts zu bestimmen, die dazu konfiguriert sind, die Signalverzerrung aufzuheben, die durch die Hardware-Imperfektionen des ihm vorausgehenden Zugangspunkts verursacht wird.

2. Zugangspunkt (10) nach Anspruch 1, **dadurch gekennzeichnet, dass**, um die Information zu bestimmen, die repräsentativ für die Signalverzerrung ist, das Bestimmungsmodul (12) des Zugangspunkts konfiguriert ist zum:

   - Erhalten einer lokalen Schätzung des Ausbreitungskanals zwischen jedem seiner Sender und jedem Benutzerendgerät in seiner Reichweite innerhalb des verteilten zellfreien Massive-MIMO-Netzes,
   - Bestimmen der Leistung, die jedem Datensignal zugewiesen ist, das geeignet ist, zwischen dem Zugangspunkt (10) und jedem Benutzerendgerät in seiner Reichweite innerhalb des verteilten zellfreien Massive-MIMO-Netzes übertragen zu werden,
   - Präkodieren jedes Datensignals, das geeignet ist, zwischen jedem seiner Sender und jedem Benutzerendgerät in seiner Reichweite innerhalb des verteilten zellfreien Massive-MIMO-Netzes übertragen zu werden, in Abhängigkeit von der lokalen Schätzung und der zugewiesenen Leistung, die zugeordnet sind;
   - Übertragen jedes präkodierten Signals am Eingang eines Hardwaremodells (48) der Übertragungskette seines zugeordneten Senders;
   - Bestimmen der Information, die repräsentativ für die Signalverzerrung ist, die durch die eigenen Hardware-Imperfektionen des Senders verursacht wird, durch Vergleich des Ausgangs des Hardwaremodells und des präkodierten Eingangssignals.

3. Zugangspunkt (10) nach Anspruch 2, **dadurch gekennzeichnet, dass** das Hardwaremodell (48) der Übertragungskette jedes Senders unter Verwendung mindestens einer vorbestimmten Messung und/oder einer vorbestimmten Optimierung modelliert wird.

4. Zugangspunkt (10) nach einem der Ansprüche 1 bis 3, **dadurch gekennzeichnet, dass** er eine Vielzahl von gleichzeitig aktiven Sendern umfasst, wobei die Information, die repräsentativ für eine Signalverzerrung ist, die durch die eigenen Hardware-Imperfektionen verursacht wird, der Verkettung der Signalverzerrung entspricht, die durch die eigenen Hardware-Imperfektionen jedes der Sender der Vielzahl verursacht wird.

5. Zugangspunkt (10) nach einem der Ansprüche 2 bis 4, **dadurch gekennzeichnet, dass** jeder Sender ein OFDM-Sender ist.

6. Zugangspunkt (10) nach einem der vorhergehenden Ansprüche, **dadurch gekennzeichnet, dass** jeder lokale Präkodierungsfilter vom Typ Präkodierung mit maximalem Übertragungsverhältnis MRT, Nullerzwingung für die Piloten FZF oder reguläre Nullerzwingung RZF ist.

7. Zentrale Einheit (62) einer Basisstation (64) eines verteilten zellfreien Massive-MIMO-Netzes, wobei die zentrale Einheit mindestens einer Fronthaul-Verbindung zugeordnet ist, die eine Vielzahl von in Serie angeordneten Zugangspunkten nach einem der vorhergehenden Ansprüche umfasst und gemäß einer vorbestimmten Durchlaufrichtung der Fronthaul-Verbindung bis zu der zentralen Einheit geordnet ist, wobei die zentrale Einheit der Basisstation mindestens ein Empfangsmodul umfasst, das dazu konfiguriert ist, über die Fronthaul-Verbindung eine Information zu empfangen, die repräsentativ für eine Signalverzerrung ist, die durch die Hardware-Imperfektionen eines Zugangspunkts verursacht wird, der ihr innerhalb der Fronthaul-Verbindung direkt vorausgeht, und die Information zu berücksichtigen, um die lokalen Präkodierungsfilter der zentralen Einheit zu bestimmen, die dazu konfiguriert sind, die Signalverzerrung aufzuheben, die durch die Hardware-Imperfektionen des ihr vorausgehenden Zugangspunkts verursacht wird.

8. Verteiltes zellfreies Massive-MIMO-Netz, umfassend mindestens eine Fronthaul-Verbindung, **dadurch gekennzeichnet, dass** die mindestens eine Fronthaul-Verbindung eine Vielzahl von in Serie angeordneten Zugangspunkten nach einem der vorhergehenden Ansprüche 1 bis 6 umfasst und gemäß einer vorbestimmten Durchlaufrichtung der Fronthaul-Verbindung geordnet ist.

9. Verfahren (70) zur Begrenzung der Signalverzerrung, die durch die Hardware-Imperfektionen einer Vielzahl von Zugangspunkten einer Fronthaul-Verbindung eines verteilten zellfreien Massive-MIMO-Netzes verursacht wird, wobei die Zugangspunkte der Vielzahl entlang der Fronthaul-Verbindung bis zu der zentralen Einheit einer Basisstation in Serie verbunden sind und gemäß einer vorbestimmten Durchlaufrichtung der Fronthaul-Verbindung geordnet sind, wobei das Verfahren bei der Kommunikation auf dem Downlink-Kommunikationsweg des verteilten zellfreien Massive-MIMO-Netzes implementiert wird, wobei das Verfahren mindestens die folgenden Schritte umfasst, wenn es durch den ersten Zugangspunkt der Fronthaul-Verbindung implementiert wird:

- Bestimmung (72) einer Information, die repräsentativ für eine Signalverzerrung ist, die durch die eigenen Hardware-Imperfektionen des Zugangspunkts verursacht wird, und
- Übertragung (74), über die Fronthaul-Verbindung, der Information, die repräsentativ für die verursachte Signalverzerrung ist, an einen anderen Zugangspunkt oder an die zentrale Einheit einer Basisstation, der bzw. die ihm innerhalb einer Fronthaul-Verbindung, die eine Vielzahl von in Serie angeordneten Zugangspunkten umfasst, die gemäß einer vorbestimmten Durchlaufrichtung der Fronthaul-Verbindung geordnet sind, direkt folgt;
oder wenn es durch einen Zugangspunkt der Fronthaul-Verbindung implementiert wird, der von dem ersten Zugangspunkt verschieden ist und von der zentralen Einheit verschieden ist:

- Bestimmung (72) einer Information, die repräsentativ für eine Signalverzerrung ist, die durch die eigenen Hardware-Imperfektionen des Zugangspunkts verursacht wird, und
- Übertragung (74), über die Fronthaul-Verbindung, der Information, die repräsentativ für die verursachte Signalverzerrung ist, an einen anderen Zugangspunkt oder an die zentrale Einheit einer Basisstation, der bzw. die ihm innerhalb einer Fronthaul-Verbindung, die eine Vielzahl von in Serie angeordneten Zugangspunkten umfasst, die gemäß einer vorbestimmten Durchlaufrichtung der Fronthaul-Verbindung geordnet sind, direkt folgt; und
- Empfang (76), über die Fronthaul-Verbindung, und Berücksichtigung einer Information, die repräsentativ für eine Signalverzerrung ist, die durch die Hardware-Imperfektionen eines Zugangspunkts verursacht wird, der ihm innerhalb der Fronthaul-Verbindung direkt vorausgeht, um die lokalen Präkodierungsfilter des Zugangspunkts oder der zentralen Einheit zu bestimmen, die dazu konfiguriert sind, die Signalverzerrung aufzuheben, die durch die Hardware-Imperfektionen des ihm vorausgehenden Zugangspunkts verursacht wird,

oder wenn es durch die zentrale Einheit implementiert wird:

- Empfang (76), über die Fronthaul-Verbindung, und Berücksichtigung einer Information, die repräsentativ für eine Signalverzerrung ist, die durch die Hardware-Imperfektionen eines Zugangspunkts verursacht wird, der ihm innerhalb der Fronthaul-Verbindung direkt vorausgeht, um die lokalen Präkodierungsfilter des Zugangspunkts oder der zentralen Einheit zu bestimmen, die dazu konfiguriert sind, die Signalverzerrung aufzuheben, die durch die Hardware-Imperfektionen des ihm vorausgehenden Zugangspunkts verursacht wird.

10. Verfahren (70) nach Anspruch 9, wobei die Bestimmung einer Information, die repräsentativ für eine Signalverzerrung ist, die durch die eigenen Hardware-Imperfektionen des Zugangspunkts verursacht wird, Folgendes umfasst:

- das Erhalten einer lokalen Schätzung des Ausbreitungskanals zwischen jedem seiner Sender und jedem Benutzerendgerät in seiner Reichweite innerhalb des verteilten zellfreien Massive-MIMO-Netzes,
- das Bestimmen der Leistung, die jedem Datensignal zugewiesen ist, das geeignet ist, zwischen dem Zugangspunkt und jedem Benutzerendgerät in seiner Reichweite innerhalb des verteilten zellfreien Massive-MIMO-Netzes übertragen zu werden,
- das Präkodieren jedes Datensignals, das geeignet ist, zwischen jedem seiner Sender und jedem Benutzerendgerät in seiner Reichweite innerhalb des verteilten zellfreien Massive-MIMO-Netzes übertragen zu werden, in Abhängigkeit von der lokalen Schätzung und der zugewiesenen Leistung, die zugeordnet sind;
- das Übertragen jedes präkodierten Signals am Eingang eines Hardwaremodells der Übertragungskette seines zugeordneten Senders;
- das Bestimmen der Information, die repräsentativ für die Signalverzerrung ist, die durch die eigenen Hardware-Imperfektionen des Senders verursacht wird, durch Vergleich des Ausgangs des Hardwaremodells und des präkodierten Eingangssignals.

11. Computerprogramm, umfassend Softwareanweisungen, die, wenn sie durch einen Computer ausgeführt werden, ein Verfahren zur Begrenzung der Signalverzerrung implementieren, die durch die Hardware-Imperfektionen einer Vielzahl von Zugangspunkten einer Fronthaul-Verbindung eines verteilten zellfreien Massive-MIMO-Netzes verursacht wird, das den Ansprüchen 9 oder 10 entspricht.

**Claims**

1. An access point (10) of a cell-free distributed massive **MIMO** network, comprising at least the three following modules:

   - a determination module (12) configured to determine an information item representative of signal distortion caused by the own hardware impairments of said access point,
   - a transmission module (14) configured to transmit, via a fronthaul link comprising a plurality of access points in series ordered along a predetermined direction of travel of said fronthaul link to the central unit of a base station, said information item representative of said signal distortion to another access point, or to the central unit, directly following it within said fronthaul link;
   - a reception module (16) configured to receive, via said fronthaul link, said information item representative of a signal distortion caused by the hardware impairments of an access point directly preceding it within said fronthaul link, and to take into account the information item so as to determine the local precoding filters of said access point configured to cancel said signal distortion caused by the hardware impairments of said access point preceding it.

2. The access point (10) according to claim 1, **characterized in that**, to determine said information item representative of signal distortion, said access point determination module (12) is configured to:

   - obtain a local estimation of the propagation channel between each of the transmitters thereof and each user terminal within the range thereof within said cell-free distributed massive **MIMO** network,
   - determine the power allocated to each data signal suitable for being transmitted between that access point (10) and each user terminal within the range thereof within said cell-free distributed massive **MIMO** network,
   - precode each data signal suitable for being transmitted between each of the transmitters thereof and each user terminal within the range thereof within said cell-free distributed massive **MIMO** network based on said associated local estimation and on said allocated power;
   - transmit each precoded signal as input to a hardware model (48) of the transmission chain of the associated transmitter thereof;
   - determine said information item representative of the signal distortion caused by the own hardware impairments of the transmitter, by comparing the output of said hardware model and said input precoded signal.

3. The access point (10) according to claim 2, **characterized in that** said hardware model (48) of the transmission chain of each transmitter is modeled using at least one predetermined measurement and/or a predetermined optimization.

4. The access point (10) according to any of claims 1 to 3, **characterized in that** it comprises a plurality of simultaneously active transmitters, said information item representative of a signal distortion caused by the own hardware impairments corresponding to the concatenation of the signal distortion caused by the own hardware impairments of each of the transmitters of said plurality.

**5.** The access point (10) according to any of claims 2 to 4, **characterized in that** the transmitter is an OFDM transmitter.

**6.** The access point (10) according to any of the preceding claims, **characterized in that** each local precoding filter is of the maximum ratio transmission (MRT) precoding, full pilot zero forcing (FZF), or regularized full pilot zero forcing (RZF) type.

**7.** A central unit (62) of a base station (64) of a cell-free distributed massive MIMO network, said central unit being associated with at least one fronthaul link comprising a plurality of access points in series, according to any of the preceding claims, and ordered along a predetermined direction of travel of said fronthaul link to said central unit, said central unit of a base station being comprising at least one reception module configured to receive, via said fronthaul link, an information item representative of signal distortion caused by hardware impairments of an access point directly preceding it within said fronthaul link, and to take into account said information item so as to determine the local precoding filters of said central unit configured to cancel said signal distortion caused by the hardware impairments of said access point preceding it.

**8.** A cell-free, distributed bulk MIMO network comprising at least one fronthaul link, **characterized in that** said at least one fronthaul link comprises a plurality of access points in series, according to any of the preceding claims 1 to 6, and ordered along a predetermined direction of travel of said fronthaul link.

**9.** A method (70) of limiting the signal distortion caused by hardware impairments of a plurality of access points of a fronthaul link of a cell-free distributed massive MIMO network, said plurality of access points being connected in series along said fronthaul link to the central unit of a base station and ordered along a predetermined direction of travel of said fronthaul link, said method being implemented during the communication on the downlink communication channel of said cell-free distributed massive MIMO network, said method comprising at least the following steps, when implemented by the first access point of said fronthaul link:

- determination (72) of an information item representative of a signal distortion caused by the own hardware impairments of the access point, and
- transmission (74), via said fronthaul link, of said information item representative of said signal distortion caused to another access point, or to the central unit of a base station, directly following it within a fronthaul link comprising a plurality of access points in series, ordered along a predetermined direction of travel of said fronthaul link; and

or, when implemented by an access point on said fronthaul link that is separate from said first access point and separate from said central unit:

- determination (72) of an information item representative of a signal distortion caused by the own hardware impairments of the access point, and
- transmission (74), via said fronthaul link, of said information item representative of said signal distortion caused to another access point, or to the central unit of a base station, directly following it within a fronthaul link comprising a plurality of access points in series, ordered along a predetermined direction of travel of said fronthaul link; and
- reception (76), via said fronthaul link, and taking into account an information item representative of a signal distortion caused by the hardware impairments of an access point directly preceding it within said fronthaul link so as to determine the local precoding filters of said access point or of said central unit configured to cancel said distortion signal caused by hardware impairments of the access point preceding it,

or, when executed by the central unit:

- reception (76), via said fronthaul link, and taking into account an information item representative of a signal distortion caused by the hardware impairments of an access point directly preceding it within said fronthaul link so as to determine the local precoding filters of said access point or of said central unit configured to cancel said distortion signal caused by hardware impairments of the access point preceding it.

**10.** The method (70) according to claim 9, wherein said determination of an information item representative of signal distortion caused by said own hardware impairments of said access point comprises:

- obtaining a local estimate of the propagation channel between each of the transmitters thereof and each user terminal within the range thereof within the said cell-free distributed massive MIMO network,
- the determination of the power allocated to each data signal suitable for being transmitted between said access point and each user terminal within the range thereof within said cell-free distributed massive MIMO network,
- the precoding of each data signal suitable for being transmitted between each of the transmitters thereof and each user terminal within the range thereof within said cell-free distributed massive MIMO network based on said associated local estimation and allocated power;
- the transmission of each precoded signal at the input of a hardware model of the transmission chain of the associated transmitter thereof;
- the determination of said information item representative of the signal distortion caused by the own hardware impairments of the transmitter, by comparing the output of said hardware model and said input precoded signal.

11. A computer program including software instructions which, when executed by a computer, implement a method of limiting signal distortion caused by hardware impairments of a plurality of access points of a fronthaul link of a cell-free distributed massive MIMO network according to claims 9 or 10.

FIG.1

FIG.2

$\{s_n, \widehat{H}_{L,n}\}$    $\{s_n, \widehat{H}_{L-1,n}\}$    $\{s_n, \widehat{H}_{3,n}\}$    $\{s_n, \widehat{H}_{2,n}\}$    $\{s_n, \widehat{H}_{1,n}\}$   A

$\{\widehat{H}_{L-1,n}, H_{d_{L-1,n}}\}$    $\{\widehat{H}_{2,n}, H_{d_{2,n}}\}$    $\{\widehat{H}_{1,n}, H_{d_{1,n}}\}$

62

64

$10_{L-1}$    $10_3$    $10_2$    66    $10_1$

p3   p2   p1

p6   p5   p4

B

$10_{L-1}$

64    $10_1$    $10_2$    $10_3$   • • • •

68

## FIG.3

EP 4 443 756 B1

```
                                70

    ┌─────────────────────────────────────┐
    │   ┌─────────────────────────────┐    │
    │   │  ┌───────────────────────┐  │    │
    │   │  │          OBT          │  │    │
    │   │  └───────────────────────┘  │    │
    │   │  ┌───────────────────────┐  │─────── 72
    │   │  │          D_P          │  │    │
    │   │  └───────────────────────┘  │    │
    │   │  ┌───────────────────────┐  │    │
    │   │  │        PRECOD         │  │    │
    │   │  └───────────────────────┘  │    │
    │   │  ┌───────────────────────┐  │    │
    │   │  │        T_MOD          │  │    │
    │   │  └───────────────────────┘  │    │
    │   │  ┌───────────────────────┐  │    │
    │   │  │         D_I_d         │  │    │
    │   │  └───────────────────────┘  │    │
    │   └─────────────────────────────┘    │
    │                                      │
    │   ┌─────────────────────────────┐    │
    │   │             T               │─────── 74
    │   └─────────────────────────────┘    │
    │                                      │
    │   ┌─────────────────────────────┐    │
    │   │             R               │─────── 76
    │   └─────────────────────────────┘    │
    └─────────────────────────────────────┘
```

## FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2022302967 A1

**Littérature non-brevet citée dans la description**

- **S. BUZZI et al.** Cell-free massive mima: User-centric approach. *IEEE Wireless Communications Letters*, 2017, vol. 6 (6), 706-709
- **G. INTERDONATO et al.** Local Partial Zero-Forcing Precoding for Cell-Free Massive MIMO. *IEEE Transactions on Wireless Communications*, 2020, vol. 19 (7), 4758-4774
- **R. PRICE**. A useful theorem for nonlinear devices having Gaussian inputs. *IRE Transactions on Information Theory*, 1958, vol. 4 (2), 69-72
- **W. JIANG**. Cell-Free Massive MIMO-OFDM Transmission Over Frequency-Selective Fading Channels. *IEEE Communications Letters*, 2021, vol. 25 (8), 2718-2722